# EUROPEAN PATENT SPECIFICATION

(11) **EP 1 476 348 B1**
(45) Date of publication and mention of the grant of the patent: **13.10.2010**
(21) Application number: 03742462.9
(22) Date of filing: 28.01.2003
(51) Int. Cl.: B62M 7/12, B62M 23/00

(54) **ARRANGEMENT AND DEVICE FOR DRIVING A VEHICLE WHEEL, PREFERABLY A MOTORCYCLE FRONT WHEEL**
ANORDNUNG UND VORRICHTUNG ZUM ANTRIEB EINES FAHRZEUGRADS, VORZUGSWEISE EINES MOTORRAD-VORDERRADS
ENSEMBLE ET DISPOSITIF D'ENTRAINEMENT D'UNE ROUE DE VEHICULE, DE PREFERENCE LA ROUE AVANT D'UN MOTOCYCLE

(30) Priority: 22.02.2002 SE 0200534
(43) Date of publication of application: 17.11.2004
(73) Proprietor: ÖHLINS RACING AB, 194 27 Upplands Väsby (SE)
(72) Inventor: GUSTAFSSON, Leif, S-370 34 Holmsjö (SE)
(74) Representative: Loqvist, Gabriel Mathias
(86) International application number: PCT/SE2003/000138
(87) International publication number: WO 2003/070554

(56) References cited:
- EP-A1- 1 151 913
- EP-A2- 0 779 205

## Description

The present invention relates to an arrangement for, by means of a motor, driving a vehicle wheel which can be arranged on a wheel axle, a front wheel on a motorcycle preferably being intended here. The vehicle wheel can, via its hub and bearing means, be mounted on the wheel axle which is mounted in a vehicle part or vehicle parts, for example in a telescopic arrangement with one, two or more fork parts. The hub comprises a side recess, and the motor can be arranged on a part mounted on the axle and extending adjacent to or wholly or partly inside the side recess of the hub, through which part the driving means of the motor, for example in the form of a driving shaft, extend for interaction with movement-transmitting means in order to bring about rotations of the hub/wheels relative to the wheel axle.

The present invention constitutes a development of the driving device according to European Patent Application EP 779205 A2. The present invention can therefore be used in motorcycles with two-wheel drive and is then intended primarily for driving the front wheel.

Also the European Patent application EP 1151913 A1 describes a driving device for a two-wheel drive motorcycle according the preamble of claim 1. To reduce the size of the driving system the device is formed as a closed circuit comprising principally three parts; one hydraulic pump, the front wheel driving hydraulic motor and means for pressuring the device.

In motorcycles, for example, the need exists for it to be possible in various situations to achieve a better and simpler service function with regard to the driving device/front-wheel drive in question. The driving device is to be easily demountable and separable from the wheel and the bearing axle. Previously known devices involve the driving motor in question first having to be removed and the inner space for movement-transmitting gear arrangements or equivalent having to be capable of being exposed in situations and places where there may be difficulties in preventing lubricant spillage and penetration of foreign matter into sensitive parts. In the known cases, the hub is a part of the lubricant-containing space, and there may be problems with, for example in the country, having the service or inspection measures in question performed in an acceptable manner. There is also a need for it to be possible to reduce or minimize the number of operations involved in service and inspection and so, for example, it is desirable to avoid the need for removing the motor itself from the driving device in question.

The main object of the present invention is to solve inter alia these problems, and the invention proposes that the driving device comprises a casing or enclosure (unit) with attached motor which is easy to mount and demount in relation to the wheel axle and the wheel/hub and can therefore easily be replaced by another corresponding unit or subjected to action or inspection in a more suitable place than, for example, where a breakdown has occurred.

The invention also solves the problem of meeting requirements for a construction which is technically simple non-critical from the functional point of view. For example, in the event of any gear collapse or faults in the movement-transmitting means, the driving function of the device is to be functionally uncoupled so that risks of obtaining undesirable functions (for example brake functions) from the device in certain running states of the vehicle/motorcycle are avoided. The mountability and demountability of the device according to the invention are also non-critical from the functional point of view. It is also important to reduce the diameter dimension of critical seals.

An arrangement according to the invention can be considered to be characterized mainly in that a part which, via a bearing means, is rotatable relative to the wheel axle is arranged so as to carry the movement-transmitting means which can, for example, consist of an inner gear rim. Further characteristics are that the rotatable part transmits its rotary movement to the hub/wheel and that the rotatable part is located inside a casing or enclosure formed in the recess, which, together with the motor, constitutes a unit which can be separated from the wheel axle and the hub in a straightforward (and easy) manner.

In developments of the inventive idea, it is proposed that the casing or the enclosure is to comprise the part extending at or in the hub and a cover assigned or attached to this part. The part is therefore arranged rotatably inside the casing or the enclosure. The rotatable part carries a movement-transmitting means which can preferably consist of an inner gear rim which is arranged on a peripheral inner surface of the part. The inner gear rim in question is in this connection to be capable of interacting with a driving gearwheel arranged on the driving shaft of the motor, which extends into the casing or the enclosure via an entry passage in the part extending at or in the side recesses of the hub (the side part which is anchored to the wheel axle). In said developments, the casing or the enclosure can comprise a cover-shaped part which on the one hand, via an end portion on an outer part, is attached to and preferably sealed against the part extending at or in the side recess of the hub, and on the other hand has a through-cutout, through which bearing means for the rotatable part are arranged and can extend.

In a preferred embodiment, a holding means, via which the rotatable part is anchored to the bearing means, is also used for the rotatable part. The holding means can consist of, for example, a holding nut or a holding screw which is arranged so as to be loosenable when any gear collapse occurs and prevents or disrupts the continued driving of the drivable part by the motor. In this connection, the holding nut or the holding screw is arranged so that, when it is loosened, the rotation-effecting action of the drivable part on the hub/front wheel via the bearing means is eliminated or essentially eliminated. The rotatable part of the bearing means can be arranged with projecting side pins which extend into a moving part on the bearing means of the hub in relation to the wheel axle. The space in the casing or the enclosure which contains said inner gear rim or other movement-transmitting means and also the gearwheel or movement-transmitting means of the motor is filled with medium, for example filled with lubricant, for which reason the space in the casing or the enclosure is arranged in a sealed manner. Bearing means for said rotatable part and the hub can comprise bush-like elements or splines which can be mounted on the wheel axle and carry bearings for the rotatable part and the hub. Alternatively, for example, the bearing of the hub can be arranged directly on the wheel axle.

By virtue of the above, the problem of the need for simplified service and access to the inner parts of the arrangement and the device is solved. Service and exchange can be carried out easily without risk of oil spillage, and the device can likewise be arranged so as to prevent undesirable functional action in certain running states of the motorcycle in the event of any collapse in the gear transmission or other movement-transmitting function used.

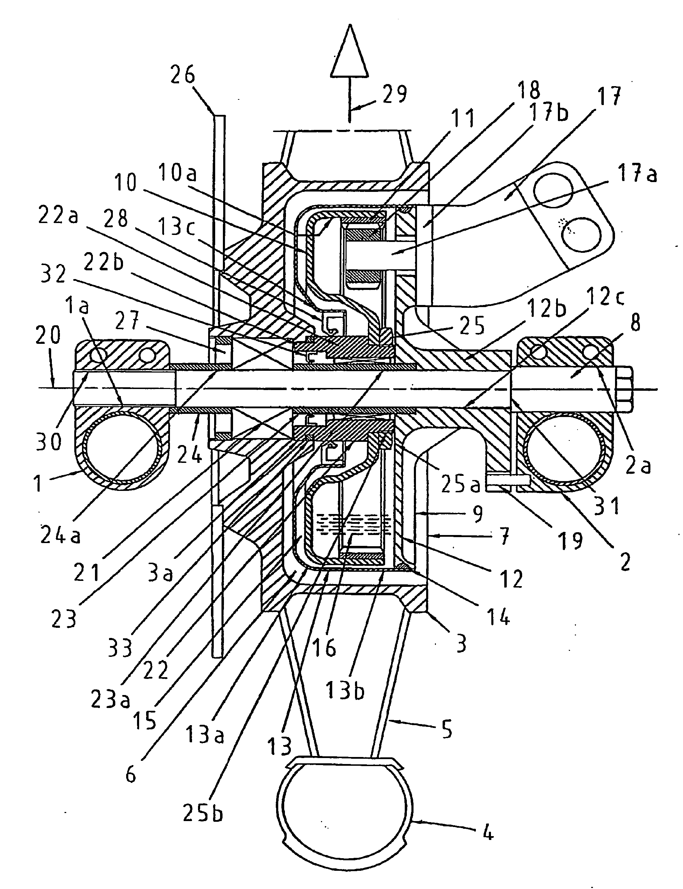

A for the present proposed embodiment of an arrangement and a device having the characteristics significant of the invention will be described below with simultaneous reference to the accompanying drawing, in which:
the driving device is shown in horizontal section and arranged in a hub of a steerable front wheel on a motorcycle, and this has a bearing axle which is anchored to motorcycle parts (telescopic fork arrangement) and extends through said hub and driving device.

In the figure, the forks in a fork arrangement are indicated in part by 1 and 2. A hub in a front wheel is shown by 3. The tyre of the wheel is symbolized by 4 and the spokes by 5. The hub comprises a recess 6 which extends in from the side 7 of the hub. The bearing axle of the wheel is symbolized by 8 and extends through cutouts 1a and, respectively, 2a through the telescopic forks 1, 2 and through further cutouts as described below. A driving device 9 is also shown in the figure. The driving device comprises a rotatable part 10 which, on a peripheral inner surface 10a, carries a movement-transmitting means 11 in the form of an inner gear rim which extends along the entire inner circumference of the peripheral surface 10a. The rotatable part 10 with associated inner gear rim is arranged in a casing which comprises a part 12 arranged so as to extend adjacent to or in the recess 6 of the hub. The casing or the enclosure unit also comprises a cover-shaped element 13 assigned and attached to the part 12. In the illustrative embodiment, the unit 13 and 12 therefore forms an enclosure or casing for the rotatable part 10 and its associated inner gear rim. The cover 13 and the part 12 are sealed relative to one another by a sealing means 14, and a sealed inner space 15 for the rotatable part and said inner gear rim therefore exists in the arrangement formed by the cover and the part 12. The inner space 15 can be completely or partly filled with lubricating oil 16 which facilitates driving of the rotatable part 10. A driving motor 17 is fastened to the outside of the part 12. The driving shaft 17a of the motor extends through a cutout 12a in the part 12 and into said space 15. The motor shaft carries a gearwheel 18 which interacts with said inner gear rim for rotating the rotatable part 10. The part 12 has a centre part 12b which extends from the side parts of the part 12 to a unit 19 for fixing the rotation angle, which is arranged so as to fix the rotational position of the apart 12 about the centre line 20 shown of the bearing axle. The centre part 12b is provided with an internal cutout 12c for the bearing axle. The hub is mounted on the bearing axle via bearing means 21 which in the present case consist of a ball bearing with a moving part, on which the hub is pressed firmly in a known manner. The rotatable part 10 is also mounted on the bearing axle via a bearing 22, the moving part of which is shown by 22a. Said bearing arrangements are arranged in conjunction with spacer means 23 and, respectively, 24. The means 23 interacts with the moving bearing part 22a of the rotatable part 10. The means 23 and 24 fix the lateral position of the bearing 21 for the hub. The moving bearing part 22a of the bearing 22 is, at the end which is in contact with the hub, made as a polygon with flat sides 22b which fits in a correspondingly shaped socket 3a in the hub so that the rotation movement of the rotatable part 10 brought about by the motor 17 and transmitted via the gear arrangement 11, 18 is transmitted on to the hub 3 which can be rotated in coordination with the rotatable part. The means 23 and 24 are made with cutouts 23a and, respectively, 24a for the bearing axle. The gear arrangement 11, 18 can be regarded as a reduction gear.

The rotatable part 10 is anchored to the moving bearing part 22a of the bearing 22 by a holding means 25 which can consist of a nut or screw. In the fully tightened state of the holding means, the moving bearing part 22a is driven by the rotary movement of the rotatable part 10. In the event of gear collapse or another fault in the transmission between the motor 17 and the rotatable part 10, a movement or action of the rotatable part can be brought about, which leads to the holding means 25 being loosened, for example by a half or quarter turn, which results in the transmission connection between the rotatable part 10 and the moving bearing part 22a ceasing or being reduced and thus in the rotary action from the rotatable part to the hub ceasing or being reduced. In this way, the risks of the gear collapse or fault in question giving rise to the rotatable part having an undesirable effect on the vehicle drive/hub drive in certain running states are excluded. A gap for the loosening possibility of the nut is shown by 25a, and the thread of the nut, which interacts with a corresponding thread on the moving bearing part 22a, is shown by 25b.

The hub is provided with a brake disc 26 and, located inside this, a space 27 for the bearing 21. A seal 28 is arranged on the cover 13 and the moving bearing part 22a. The seal seals the space 15 at the moving bearing part 22a.

The arrangement described above is therefore defined in its lateral position in relation to the forward direction 29 of the vehicle. The components described in the arrangement are held in the pressed-together state shown in the figure by means of bolting arrangements which can comprise a thread 30 on the wheel axle. The thread 30 interacts with a corresponding thread in the vehicle part 1. On the vehicle part 2, a shoulder 31 on the axle can interact with a corresponding shoulder on the hub. The bearing axle 8 therefore extends in or through the cutouts 1a, 12c, 23a, 24a and 2a and the cutout in the bearing 21. For demounting the driving unit with attached motor 17, the bearing axle is loosened so that it can be removed/drawn out by unscrewing, for example to the right in the figure. The motorcycle can be provided with screw-off caps in the vehicle parts 1 and 2. The rotation-fixing unit 19 comes loose from the fork 2 when the wheel with hub and side part 12, 12b and the motor 17 are moved forwards in the direction 29. In the thus advanced position, the casing or the enclosure unit 12, 13 with attached motor 17 can be removed from the recess 6 as a unit with the lubricant 16 still enclosed. Mounting a new unit or remounting a repaired or inspected casing unit to the motorcycle is performed by carrying out said measures in reverse order.

The cover 13 is sealed against the moving bearing part 22a by means of the sealing ring 28, and the parts of the bearing 22 are sealed in relation to one another by a seal 32. The cover 13 is provided with a part 13a which is curved in the figure plane and merges with a side part 13b which carries the seal 14 at its end. The cover also has an inner let-in part 13c which carries the seal 28. The rotatable part 10 has a portion for a holding means 25 to act on and is provided with a through-cutout for the moving bearing part 22a. The interaction between the centre part 12b and the device 19 for fixing rotary movement takes place via pin-shaped elements and cutouts on and, respectively, in the hub part 12b and the vehicle part 2. The mounting of the motor 17 on the outside of the part 12 is carried out via a seal 17b on the motor in in order to bring about a sealed lead-through at the motor shaft 17a. The function of the motor is known per se through, for example, said European patent application. The seal 28 has a considerably reduced diameter dimension in relation to a comparable seal in known cases and shows a reduction of 50-75%. This is important as the wheel speed can be 1800 rpm. The space 27 can comprise a seal (not shown) against the bearing 21, which can be what is known as a self-sealing bearing. A seal 33 seals the torque-transmitting polygon in relation to the space in the hub. Other seals not described are of conventional type.

The invention is not limited to the illustrative embodiment above but can undergo modifications in accordance with the patent claims bellow.

## Claims

1. Arrangement for, by means of a motor (17), driving a vehicle wheel, preferably a motorcycle front wheel, which can be arranged on a wheel/bearing axle (8) and can, via its hub (3) and bearing means (21), be mounted on the wheel/bearing axle (8) which is mounted in a vehicle part or vehicle parts, the hub (3) comprising a side recess (6), and the motor (17) being arrangeable on a part (12) brought into relation to the axle (8) and extending at or in the side recess (6) of the hub (3), through which part (12) the driving means (17a), for example driving shaft, of the motor (17) extend for interaction with movement-transmitting means (11) in order to bring about rotations of the hub/wheel (3) relative to the wheel axle (8), and that a part (10) which, via bearing means (22), is rotatable relative to the wheel axle (8) is arranged so as to carry the movement-transmitting means (11), for example an inner gear rim, and to transmit its rotary movement to the hub/wheel (3), **characterized in that** the rotatable part (10) is a part separate from the wheel hub (3) and located inside a casing or enclosure formed in the recess (6) comprising the part (12) extending at or in the hub (3) and a cover (13) assigned or attached to this part (12), which, together with the motor (17), constitutes a unit with an internal sealed space (15) filled with lubricant (16), which can be separated from the wheel axle (8) and the hub (3) with the lubricant (16) still enclosed.

2. Arrangement according to Patent Claim 1, **characterized in that** the rotatable part (10) carries a movement-transmitting means (11) in the form of an inner gear rim arranged on a peripheral inner surface (10a) of the part (10), and **in that** the inner gear rim can interact with a driving gearwheel (18) arranged on the driving shaft (17a) of the motor (17), which extends into the casing or the enclosure via an entry passage (12a) in the part (12) extending at or in the side recess (6) of the hub (3).

3. Arrangement according to Patent Claim 1 or 2, **characterized in that** the casing or the enclosure comprises a cover-shaped part (13) which on the one hand, via an end portion on an outer part (13b), is attached to and preferably sealed (14) against the part (12) extending at or in the side recess (6) of the hub (3), and on the other hand has a central through-cutout (12c), through or in which bearing means (22) for the rotatable part .(10) extend.

4. Arrangement according to Patent Claim 3, **characterized in that** the rotatable part (10) is anchored to the bearing means (22) by holding means (25), for example a holding nut or holding screw.

5. Arrangement according to Patent Claim 4, **characterized in that** the holding nut or holding screw, i.e. holding means (25), is arranged so as to be loosenable when any gear collapse occurs and prevents or disrupts the continued driving of the drivable part (17a) by the motor (17), and **in that**, when the holding nut or holding screw, i.e. holding means (25), is loosened, the rotation-effecting action of the drivable part (17a) on the hub/front wheel (3) via the bearing means (22) is essentially eliminated.

6. Arrangement according to any one of the preceding patent claims, **characterized in that** a moving bearing part (22a) of the bearing means (22) is arranged with projecting side pins (22b) which extend into recesses (3a) in the hub (3) or with a concentrically arranged polygon which extends into a corresponding recess.

7. Arrangement according to any one of the preceding patent claims, **characterized in that** the part (12) extending at or wholly or partly in the recess (6) has a centre part (12b) which forms part of the bearing arrangement (21, 22) on the wheel axle (8), and **in that** the centre part (12b) is locked in the direction of rotation to the vehicle part or, the vehicle parts by rotation-fixing means (19).

8. Arrangement according to any one of the preceding patent claims, **characterized in that** its various components are arranged so as to occupy their laterally fixed positions via locking means (31), for example in the form of threads and shoulders, on the ends of the wheel axle (8) and said vehicle part or vehicle parts.

9. Arrangement according to any one of the preceding patent claims, **characterized in that** the motor (17) is located in front of telescopic legs (1, 2) or equivalent located on the vehicle.

## Patentansprüche

1. Anordnung zum Antreiben, mittels eines Motors (17), eines Fahrzeugrads, vorzugsweise eines Motorrad-Vorderrads, welches an einer Rad-/Tragachse (8) angeordnet werden kann und über seine Nabe (3) und Lagermittel (21) an der Rad-/Tragachse (8) angebracht werden kann, welche in einem Fahrzeugteil oder Fahrzeugteilen angebracht ist, wobei die Nabe (3) eine seitliche Aussparung (6) umfasst und der Motor (17) an einem Teil (12) angeordnet werden kann, das in Beziehung zur Achse (8) gebracht ist und an oder in der seitlichen Aussparung (6) der Nabe (3) verläuft, durch welches Teil (12) sich das Antriebsmittel (17a), beispielsweise die Antriebswelle, des Motors (17) für das Zusammenwirken mit einem bewegungsübertragenden Mittel (11) erstreckt, um Drehungen der Nabe / des Rads (3) relativ zur Radachse (8) zu bewirken, und dass ein Teil (10), welches über Lagermittel (22) relativ zur Radachse (8) drehbar ist, derart angeordnet ist, dass es das bewegungsübertragende Mittel (11), beispielsweise einen Innenzahnkranz, trägt und dessen Drehbewegung zur Nabe / zum Rad (3) überträgt, **dadurch gekennzeichnet, dass** das drehbare Teil (10) ein von der Radnabe (3) getrenntes Teil ist und in einem Gehäuse oder einer Umschließung angeordnet ist, welches bzw. welche in der Aussparung (6) ausgebildet ist und das an oder in der Nabe (3) verlaufende Teil (12) und eine diesem Teil (12) zugeordnete oder daran befestigte Abdeckung (13) umfasst und welches bzw. welche zusammen mit dem Motor (17) eine Einheit mit einem mit Schmiermittel (16) befüllten inneren abgedichteten Raum (15) bildet, welche von der Radachse (8) und der Nabe (3) mit dem noch umschlossenen Schmiermittel (16) getrennt werden kann.

2. Anordnung nach Patentanspruch 1, **dadurch gekennzeichnet, dass** das drehbare Teil (10) ein bewegungsübertragendes Mittel (11) in Form eines Innenzahnkranzes trägt, der an einer umlaufenden Innenfläche (10a) des Teils (10) angeordnet ist, und dass der Innenzahnkranz mit einem an der Antriebswelle (17a) des Motors (17) angeordneten Antriebszahnrad (18) zusammenwirken kann, welches sich über einen Eintrittsdurchlass (12a) in dem an oder in der seitlichen Aussparung (6) der Nabe (3) verlaufenden Teil (12) in das Gehäuse oder die Umschließung erstreckt.

3. Anordnung nach Patentanspruch 1 oder 2, **dadurch gekennzeichnet, dass** das Gehäuse oder die Umschließung ein deckelförmiges Teil (13) umfasst, welches einerseits über einen Endabschnitt an einem Außenteil (13b) an dem an oder in der seitlichen Aussparung (6) der Nabe (3) verlaufenden Teil (12) befestigt und vorzugsweise dagegen abgedichtet (14) ist und andererseits einen mittigen durchgehenden Ausschnitt (12c) aufweist, durch welchen oder in welchem sich Lagermittel (22) für das drehbare Teil (10) erstrecken.

4. Anordnung nach Patentanspruch 3, **dadurch gekennzeichnet, dass** das drehbare Teil (10) durch ein Haltemittel (25), beispielsweise eine Haltemutter oder Halteschraube, an den Lagermitteln (22) verankert ist.

5. Anordnung nach Patentanspruch 4, **dadurch gekennzeichnet, dass** die Haltemutter oder Halteschraube, d.h. das Haltemittel (25), derart angeordnet ist, dass sie lösbar ist, wenn irgendein Getriebeausfall eintritt und den weiteren Antrieb des antreibbaren Teils (17a) durch den Motor (17) verhindert oder unterbricht, und dass, wenn die Haltemutter oder Halteschraube, d.h. das Haltemittel (25), gelöst ist, die die Drehung hervorrufende Wirkung des antreibbaren Teils (17a) an der Nabe / dem Vorderrad (3) über die Lagermittel (22) im Wesentlichen eliminiert wird.

6. Anordnung nach irgendeinem der vorangehenden Patentansprüche, **dadurch gekennzeichnet, dass** ein bewegliches Lagerteil (22a) der Lagermittel (22) mit hervorstehenden Seitenstiften (22b), welche sich in Aussparungen (3a) in der Nabe (3) erstrecken, oder mit einem konzentrisch angeordneten Polygon, welches sich in eine entsprechende Aussparung erstreckt, angeordnet ist.

7. Anordnung nach irgendeinem der vorangehenden Patentansprüche, **dadurch gekennzeichnet, dass** das an oder ganz oder teilweise in der Aussparung (6) verlaufende Teil (12) einen mittleren Teil (12b) aufweist, welcher einen Teil der Lageranordnung (21, 22) an der Radachse (8) bildet, und dass der mittlere Teil (12b) durch ein Drehbefestigungsmittel (19) in Drehrichtung an dem Fahrzeugteil oder den Fahrzeugteilen arretiert ist.

8. Anordnung nach irgendeinem der vorangehenden Patentansprüche, **dadurch gekennzeichnet, dass** ihre verschiedenen Bestandteile derart angeordnet sind, dass sie ihre seitlich befestigten Positionen über Arretiermittel (31), beispielsweise in Form von Gewinden und Absätzen, an den Enden der Radachse (8) und dem Fahrzeugteil oder den Fahrzeugteilen einnehmen.

9. Anordnung nach irgendeinem der vorangehenden Patentansprüche, **dadurch gekennzeichnet, dass** der Motor (17) vor der am Fahrzeug angeordneten teleskopischen Strebe (1, 2) oder einem am Fahrzeug angeordneten Äquivalent positioniert ist.

## Revendications

1. Agencement pour, au moyen d'un moteur (17), entraîner une roue d'un véhicule, préférablement une roue avant d'un motocycle, qui peut être agencé sur une roue/un essieu porteur (8) et peut, par l'intermédiaire de son moyeu (3) et de son moyen porteur (21), être monté sur la roue/l'essieu porteur (8) qui est monté(e) dans une partie du véhicule ou des parties du véhicule, le moyeu (3) comprenant un renfoncement latéral (6), et le moteur (17) pouvant être agencé sur une partie (12) mise en relation avec l'essieu (8) et s'étendant au niveau du ou dans le renfoncement latéral (6) du moyeu (3), par l'intermédiaire de laquelle partie (12) le moyen d'entraînement (17a), par exemple l'arbre moteur, du moteur (17) s'étend pour une interaction avec un moyen de transmission de mouvement (11) pour créer des rotations du moyeu/de la roue (3) par rapport à l'essieu de roue (8), et une partie (10) qui, par l'intermédiaire d'un moyen porteur (22), est rotative par rapport à l'essieu de roue (8) est agencée de façon à supporter le moyen de transmission de mouvement (11), par exemple un rebord intérieur de roue dentée, et à transmettre son mouvement rotatif au moyeu/à la roue (3), **caractérisé en ce que** la partie rotative (10) est une partie séparée du moyeu de roue (3) et située à l'intérieur d'un boîtier ou d'un logement formé dans le renfoncement (6) comprenant la partie (12) s'étendant au niveau du ou dans le moyeu (3) et un capot (13) assigné ou fixé à cette partie (12), qui, avec le moteur (17), constitue une unité avec un espace étanche interne (15) rempli d'un lubrifiant (16), qui peut être séparé de l'essieu de roue (8) et du moyeu (3) avec le lubrifiant (16) toujours enfermé.

2. Agencement selon la revendication de brevet 1, **caractérisé en ce que** la partie rotative (10) supporte un moyen de transmission de mouvement (11) sous la forme d'un rebord intérieur de roue dentée agencé sur une surface intérieure périphérique (10a) de la partie (10), et **en ce que** le rebord intérieur de roue dentée peut interagir avec une roue dentée d'entraînement (18) agencée sur l'arbre moteur (17a) du moteur (17), qui s'étend à l'intérieur du boîtier ou du logement par l'intermédiaire d'un passage d'entrée (12a) dans la partie (12) s'étendant au niveau du ou dans le renfoncement latéral (6) du moyeu (3).

3. Agencement selon la revendication de brevet 1 ou 2, **caractérisé en ce que** le boîtier ou le logement comprend une partie en forme de capot (13) qui d'une part, par l'intermédiaire d'une partie d'extrémité sur une partie extérieure (13b), est fixée à et de préférence de façon étanche (14) contre la partie (12) s'étendant au niveau du ou dans le renfoncement latéral (6) du moyeu (3), et d'autre part a une découpe traversante centrale (12c), à travers ou dans laquelle le moyen porteur (22) pour la partie rotative (10) s'étend.

4. Agencement selon la revendication de brevet 3, **caractérisé en ce que** la partie rotative (10) est ancrée au moyen porteur (22) par un moyen de maintien (25), par exemple un écrou de maintien ou une vis de maintien.

5. Agencement selon la revendication de brevet 4, **caractérisé en ce que** l'écrou de maintien ou la vis de maintien, à savoir le moyen de maintien (25), est agencé(e) de façon à pouvoir être desserré(e) dans le cas d'une défaillance d'une quelconque roue dentée qui empêche ou interrompt l'entraînement continu de la partie entraînable (17a) par le moteur (17), et **en ce que**, lorsque l'écrou de maintien ou la vis de maintien, à savoir le moyen de maintien (25), est desserré(e), l'action d'exécution de la rotation de la partie entraînable (17a) sur le moyeu/la roue avant (3) par l'intermédiaire du moyen porteur (22) est essentiellement éliminée.

6. Agencement selon l'une quelconque des revendications de brevet précédentes, **caractérisé en ce qu'**une partie porteuse mobile (22a) du moyen porteur (22) est agencée avec des broches latérales en saillie (22b) qui s'étendent dans des renfoncements (3a) dans le moyeu (3) ou avec un polygone agencé concentriquement qui s'étend dans un renfoncement correspondant.

7. Agencement selon l'une quelconque des revendications de brevet précédentes, **caractérisé en ce que** la partie (12) s'étendant au niveau du ou totalement ou partiellement dans le renfoncement (6) a une partie centrale (12b) qui constitue une partie de l'agencement porteur (21, 22) sur l'essieu de roue (8), et **en ce que** la partie centrale (12b) est bloquée dans le sens de rotation sur la partie du véhicule ou les parties du véhicule par un moyen de fixation en rotation (19).

8. Agencement selon l'une quelconque des revendications de brevet précédentes, **caractérisé en ce que** ses divers composants sont agencés de façon à occuper leurs positions fixées latéralement par l'intermédiaire d'un moyen de blocage (31), par exemple sous la forme de filets et d'épaulements, sur les extrémités de l'essieu de roue (8) et ladite partie du véhicule ou lesdites parties du véhicule.

9. Agencement selon l'une quelconque des revendications de brevet précédentes, **caractérisé en ce que** le moteur (17) est situé devant des montants télescopiques (1, 2) ou équivalent situés sur le véhicule.
